# EUROPÄISCHE PATENTSCHRIFT

(11) **EP 2 671 824 B1**
(45) Veröffentlichungstag und Bekanntmachung des Hinweises auf die Patenterteilung: **13.01.2016**
(21) Anmeldenummer: 13169529.8
(22) Anmeldetag: 28.05.2013
(51) Int. Cl.: B65G 27/02, B65G 47/14

(54) **Bereitstellungseinrichtung und- verfahren für Holzbrennstoffpellets**
Supply device and method for wood fuel pellets
Dispositif et procédé de fourniture de granulés de bois combustibles

(30) Priorität: 04.06.2012 DE 102012010941
(43) Veröffentlichungstag der Anmeldung: 11.12.2013
(73) Patentinhaber: ROBERT BOSCH GMBH, 70442 Stuttgart (DE)
(72) Erfinder: Pfitzer, Soeren, 71735 Nussdorf (DE); Wu, Datong, 75181 Pforzheim (DE); Abedi, Abdollah, 35390 Giessen (DE)

(56) Entgegenhaltungen:
- DE-B- 1 008 649
- US-A- 4 775 284
- US-A1- 2007 265 429

## Beschreibung

Die Erfindung betrifft eine Bereitstellungseinrichtung für Holzbrennstoffpellets gemäß dem Oberbegriff von Anspruch 1 sowie ein Verfahren zur Bereitstellung von Holzbrennstoffpellets nach Anspruch 8. Eine Bereitstellungseinrichtung, ist beispielsweise aus der US-A-48775 284 bekannt.

Holzbrennstoffpellets (oder einfach Holzpellets) sind ein biogener Brennstoff, der vollständig oder überwiegend aus Holz oder Sägenebenprodukten hergestellt wird. Es handelt sich hierbei um zum Beispiel nach der Europäischen Norm EN 14961 genormte, zylindrische Presslinge mit zumeist einem Durchmesser von fünf bis sechs Millimetern und einer Länge von acht bis dreißig Millimetern. Holzpellets werden in Pelletspeichern eingelagert, von wo aus sie einer Verbrennungseinrichtung zugeführt werden müssen. Hierfür werden unter anderem Förderschnecken eingesetzt, die in einem Trog liegen. Hiermit können Pellets in Richtung der Förderschnecke befördert werden. Nachteilig hierbei sind ein hoher Stromverbrauch und eine ungenaue Pelletdosierung in kleinen Leistungsbereichen. Die Folge sind ein erhöhter Brennstoffbedarf und eine unsaubere Verbrennungsregelung mit erhöhten Emissionen.

Aufgabe der Erfindung ist es daher, die Nachteile des Stands der Technik zu überwinden, und eine Bereitstellungseinrichtung für Holzbrennstoffpellets zu entwickeln, die einen geringen Stromverbrauch aufweist sowie eine genaue Pelletdosierung über einen großen Leistungsbereich ermöglicht, um so den Brennstoffbedarf zu reduzieren und die Verbrennung emissionsarm regeln zu können. Die Pelletdosierung soll zudem sicher und dauerhaft möglich, sowie die Bereitstellungseinrichtung kostengünstig und auf einfache Weise herstellbar und betreibbar sein. Außerdem soll ein Verfahren entwickelt werden, dass diese Anforderungen erfüllen kann.

Erfindungsgemäß wird dies mit den Merkmalen der Patentansprüche 1 und 8 gelöst. Vorteilhafte Weiterbildungen sind den Unteransprüchen zu entnehmen.

Bei einer Bereitstellungseinrichtung für Holzbrennstoffpellets mit einem Pelletspeicher und einer Fördervorrichtung mit einem Fördermittel zum Fördern von Holzbrennstoffpellets in einer Förderrichtung, wobei die Fördervorrichtung mit einer Eingangsseite mit dem Pelletspeicher in Verbindung steht und eine von der Eingangsseite in die Förderrichtung ausgerichtete Oberfläche mit einer Steigung sowie einen Aktor aufweist, wobei, dass das Fördermittel im Wesentlichen drehfest und im Wesentlichen positionsfest gelagert ist sowie mittels des Aktors in Schwingung versetzbar ist, wobei die Schwingung eine geodätisch vertikale Schwingungskomponente umfasst.

Der Vorteil einer derartigen Ausbildung ist, dass Holzpellets von der Eingangsseite in Richtung einer Verbrennungseinrichtung oder ähnlichem durch die vertikale Schwingungskomponente fortbewegbar sind. Ein Schwingungserreger hat einen geringen Stromverbrauch und die Schwingungen führen zu einer relativ kontinuierlichen Weiterbewegung der Holzpellets über einen sehr großen Leistungsbereich. Insbesondere ist auch eine sehr genaue Pelletdosierung bei sehr geringem Leistungsbereich möglich. Die Dosierung kann insbesondere durch eine Amplitudenmodulation oder durch eine Frequenzmodulation der Schwingungskomponenten erfolgen, die mithin bevorzugt nicht konstant sind. Im Weiteren wird die schwingungsbedingte Fortbewegung der Pellets auch als Mikrowurf bezeichnet. Mithin führt die genaue Dosierung zu einem geringeren Brennstoffbedarf und erlaubt eine genau angepasste emissionsarme Verbrennungsregelung.

Die im Wesentlichen verdrehfeste und positionsfeste Lagerung sollte eine für die Schwingungserregung ausreichende Bewegungsfreiheit ermöglichen. Die drehfeste und positionsfeste Lagerung beschränkt sich mithin auf den Bewegungsbereich außerhalb der Schwingungsamplituden. Zur Schwingungserregung notwendige Aktoren können beispielsweise eine umlaufende Unwucht aufweisen. Derartige Aktoren sind kostengünstig und lassen sich über einen breiten Stellbereich regeln. Entsprechend genau kann die Pelletdosierung vorgenommen werden.

Um den gesamten Inhalt des Pelletspeichers entnehmen zu können, ist die Fördervorrichtung mit ihrer Eingangsseite im Bereich des geodätisch unten liegenden Endes des Pelletspeichers angeordnet. Am gegenüberliegenden Ende der Fördervorrichtung ist das Fördermittel mit einer endseitigen Abladekante ausgestattet. Über diese Abladekante hinweg bewegte Holzbrennstoffpellets werden dann durch die Erdanziehungskraft bedingt weiterbewegt - entweder im freien Fall oder aber auf einer Rutsche.
Gemäß einer Weiterbildung der Erfindung ist vorgesehen, dass die Schwingung eine geodätisch horizontale Schwingungskomponente umfasst. Mittels einer solchen geodätisch horizontalen Schwingungskomponente kann ein auf der Oberfläche der Fördervorrichtung vertikal angeregtes Holzpellet bergauf transportiert werden - gewissermaßen durch horizontales Zurückbewegen der Oberfläche während der vertikal angeregten Mikrowurf-Flugphase und horizontales Vorwärtsbewegen der Oberfläche während der Mikrowurf-Kontaktphase. Eine ausschließlich geodätisch vertikale Schwingungsanregung ist hingegen sehr gut dafür geeignet, Holzbrennstoffpellets bergab zu transportieren. Der Impuls für eine horizontale Fortbewegung erfolgt dann mittels des Mikrowurf-Aufpralls der Brennstoffpellets auf die ansteigende Oberfläche.

Die Überlagerung der vertikalen Schwingungskomponente mit einer geodätisch horizontalen Schwingungskomponente ermöglicht nunmehr, die Eingangsseite und Teilbereiche des Pelletspeichers tiefer als den Zielort anzuordnen. So kann der Pelletspeicher beispielsweise im Erdreich versenkt werden. Als horizontale Schwingungskomponenten geeignet sind entweder lineare Bewegungen oder aber Drehschwingungen. Die Auswahl dieser horizontalen Schwingungskomponente hängt im Wesentlichen von der Förderrichtung ab, die z.B. linear, geradlinig oder spiralförmig erfolgen kann.

Daher sieht eine Fortbildung der Erfindung vor, dass die Schwingung eine in Förderrichtung weisende Schwingungskomponente umfasst, also eine Kombination von geodätisch vertikalen und horizontalen Schwingungskomponenten. Auf diese Weise kann die Oberfläche unterhalb eines abgehobenen Holzpellets (Flugphase) zurück bewegt werden und sobald das Pellet wieder auf der Oberfläche aufliegt (Kontaktphase) wieder gemeinsam mit dem Holzpellet in Förderrichtung nach vorne bewegt werden.

Dieses erfindungsgemäße Mikrowurfprinzip beschränkt sich dabei typischerweise auf Wurfhöhen der Holzpellets von Millimeter-Bruchteilen bis hin zu wenigen Millimetern. Die Vibrationen sorgen zudem dafür, dass die Holzpellets gleichmäßig über die Oberfläche der Fördervorrichtung verteilt sind. Gerade hierdurch ist eine sehr genaue Pelletdosierung möglich.

In einer Variante der Erfindung ist vorgesehen, dass die Oberfläche von der Eingangsseite in Förderrichtung wenigstens zum Teil geodätisch ansteigt. Hierdurch ist es möglich, den Pelletspeicher tieferliegend anzuordnen als den Pelletzielort, wobei es sich insbesondere um eine Verbrennungseinrichtung handelt.
In einer Weiterbildung der Erfindung sind an der Oberfläche längs zur Förderrichtung wenigstens teilweise randseitige Überhöhungen (Randerhöhungen, Begrenzungen) angeordnet. Hierdurch wird verhindert, dass Pellets seitlich von der Fördervorrichtung herabfallen. Hierdurch ist der Stromverbrauch gering, da Pellets nicht unnötigerweise transportiert und anschließend wieder in die Ausgangsposition fallengelassen werden. Außerdem kann die Fördervorrichtung aus dem Bereich des Pelletspeichers hinaus verlaufen, ohne das Pellets in der Umgebung der Bereitstellungseinrichtung zu Boden fallen können.

Gemäß einer Weiterbildung der Erfindung ist vorgesehen, dass die Oberfläche mindestens in Teilbereichen eine Strukturierung und/oder Beschichtung aufweist, mittels der die Haftung beziehungsweise Reibung der Pellets auf der Oberfläche während der Kontaktphase des Mikrowurfs erhöht wird. Dies können beispielsweise quer zur Förderrichtung ausgerichtete Stufen, Rippen, Rillen, Noppen, Vertiefungen oder aber auch eine Gummibeschichtung sein. Mittels der Stufen lässt sich die Fortbewegungsgeschwindigkeit der Holzpellets auf der Oberfläche abschnittsweise unterteilen. Durch einen Steigungswechsel lässt sich auf einfache Weise die Fortbewegungsgeschwindigkeit der Holzpellets beeinflussen und somit eine Separierung der Pellets auf ihrem Weg zum Zielort vornehmen.

In einer anderen Weiterentwicklung der erfindungsgemäßen Bereitstellungseinrichtung ist das Fördermittel am Aktor aufgehängt. Dies ermöglicht eine Positionierung des Aktors in einem leicht zugängigen Bereich. Außerdem ist die Lagerung des Fördermittels kostengünstig ausgestaltbar.

Gemäß einer Variante der Erfindung ist die Förderrichtung im Wesentlichen linear ausgerichtet. Durch eine lineare Förderrichtung kann der Pelletspeicher beabstandet zum Zielort positioniert sein, ohne dass eine große Rutsche mit entsprechender Höhendifferenz erforderlich ist. So kann beispielsweise ein Pelletspeicher mit einer beabstandet zu diesem angeordneten Verbrennungseinrichtung verbunden werden. Andererseits kann der Pelletspeicher auch in mittelbarer oder unmittelbarer Nähe zur Verbrennungseinrichtung angeordnet sein, wie zum Beispiel ein an der Verbrennungseinrichtung vorhandener Zwischen- oder Tagesbehälter.

Der Erfindung sieht vor, dass das Fördermittel ein Trägerrohr mit einer wendelförmig an dieser angeordneten Oberfläche umfasst. Ein solches Fördermittel kann Holzbrennstoffpellets auf engem Raum nach oben befördern. Eine lange geradlinig-lineare Rampe ist dann entbehrlich. Das Trägerrohr sollte hierbei im Wesentlichen vertikal ausgerichtet sein. Die wendelförmige Oberfläche kann sich dann an einem zylindrischen Trägerrohr oder aber an einem konischen Trägerrohr entlang winden.

Auch können eine im Wesentlichen geradlinig-lineare Förderrichtung und eine wendelförmige Förderrichtung miteinander kombiniert werden. So ist es beispielsweise möglich die Holzbrennstoffpellets zunächst wendelförmig nach oben zu transportieren, bevor sie linear horizontal oder mit geringer Steigung weitertransportiert werden. Zur Anregung sind dann meist zwei separate Aktoren mit unterschiedlichen horizontalen sowie vertikalen Schwingungskomponenten erforderlich.

Entsprechend einer speziellen Weiterbildung der erfindungsgemäßen Bereitstellungseinrichtung ist die Oberfläche wendelförmig und in Förderrichtung (r) geodätisch ansteigend auf einer äußeren Mantelfläche des Trägerrohres (15) um das Trägerrohr herumgeführt und mündet über eine Abladekante ins Innere des Trägerrohrs. Eine solche Anordnung ist besonders günstig, wenn der Pelletspeicher oberhalb des Zielortes angeordnet ist. Die Bereitstellungseinrichtung dient dann insbesondere der Dosierung, weniger jedoch einer Überwindung eines Höhenhindernisses oder einer Transportstrecke.

Um die Anzahl der Holzbrennstoffpellets bereits vor dem Fördermittel zu reduzieren, ist das Fördermittel gemäß einer Variante der Erfindung wenigstens teilweise innerhalb des Pelletspeichers angeordnet sowie von einem geodätischen vertikal ausgerichteten Entlastungsrohr umgeben, das eine geodätisch oben liegende Pelletsperre ausbildet, wobei im Bereich der Eingangsseite der Fördervorrichtung eine radiale Öffnung für den Zutritt der Pellets zur Fördervorrichtung ausgebildet ist (zum Beispiel auch vollumfänglich). Damit wird ein Freiraum um das Trägerrohr geschaffen, der sich nicht mit Holzbrennstoffpellets füllt. Auf diese Weise ist die Fördervorrichtung wenigstens teilweise innerhalb des Pelletspeichers anordenbar. Es ist nur wenig oder kein Bauraum unterhalb des Pelletspeichers erforderlich. Bevorzugt ist das Entlastungsrohr dabei am Pelletspeicher befestigt.

In einer anderen Weiterentwicklung der erfindungsgemäßen Bereitstellungseinrichtung ist vorgesehen, dass die Oberfläche wendelförmig und in Förderrichtung (r) geodätisch ansteigend auf einer inneren Mantelfläche des Trägerrohrs herumgeführt ist sowie eine radial nach außen weisende Abladekante aufweist, und dass der Pelletspeicher ein geodätisch unterseitiges und geodätisch vertikal ausgerichtetes Entlastungsrohr aufweist, dass von oben in das Trägerrohr hineinragt, wobei innerhalb des Trägerrohrs im Bereich der Eingangsseite der Fördervorrichtung eine radiale Öffnung für den Zutritt der Pellets zur Fördervorrichtung ausgebildet ist (zum Beispiel auch vollumfänglich). Plakativer ausgedrückt ragt das an den Pelletspeicher angeschlossene Entlastungsrohr von oben in eine schüsselartige Fördervorrichtung, an dessen Innenwandung sich die Oberfläche nach oben windet. Eine solche Ausbildung ist besonders kostengünstig fertigbar.

Um ein Nachrutschen der Holzbrennstoffpellets aus dem Pelletspeicher in die Eingangsseite der Fördervorrichtung zu steuern und ein Verstopfen des Entlastungsrohrs durch sich verkeilende Holzbrennstoffpellets zu vermeiden, ragt eine Stange in das Entlastungsrohr hinein, die mittels eines Aktors in Schwingung versetzbar ist. Mittels einer schwingenden Stange lassen sich verkeilte Holzbrennstoffpellets lösen.

Bevorzugt ist die Stange, welche in das Entlastungsrohr hineinragt, mittels kinematischer Kopplung mit dem Aktor zur Schwingungserregung des Fördermittels verbunden und somit ebenfalls in Schwingung versetzbar. Die vom Aktor erzeugten Schwingungen des Fördermittels können mit einer zusätzlichen Schwingung zur Erregung der Stange überlagert werden. Damit an keiner Stelle des Entlastungsrohrs eine Verstopfung auftreten kann, sollte die Stange das gesamte Entlastungsrohr durchdringen.

Die Schwingamplituden des Aktors beziehungsweise des Fördermittels sowie der Stange sind durch das Entlastungsrohr unabhängig von der Pelletmenge im Pelletspeicher.

Die Erfindung betrifft weiterhin ein Verfahren zur Bereitstellung von Holzbrennstoffpellets mittels einer Bereitstellungseinrichtung, wie sie zuvor beschrieben wurde, und das sich durch ein Zuführen von Holzbrennstoffpellets in die Eingangsseite der Fördervorrichtung durch Nachrutschen von Holzbrennstoffpellets aus dem Pelletspeicher, ein Beaufschlagen des Fördermittels mit einer Schwingung mittels des Aktors, sowie ein Transportieren der Holzbrennstoffpellets in Förderrichtung von der Eingangsseite über die Oberfläche mittels der durch den Aktor angeregten Schwingung und dadurch ausgelöste Mikrowürfe der Holzbrennstoffpellets auf der Oberfläche auszeichnet.

Die Vorteile dieses Verfahrens entsprechen im Wesentlichen denen der Vorrichtung. So kann eine angeforderte Menge an Holzbrennstoffpellets besonders genau dosiert werden. Außerdem ist der Stromverbrauch zur Erregung der Schwingungen gering. Der Transport ist zudem sicher und dauerhaft gewährleistet. Ein weiterer Vorteil ist die geringe Gefahr für Verletzungen und Vorrichtungsschäden, da keine freiliegenden drehenden oder sich fortbewegenden Teile erforderlich sind.

Eine Ausgestaltung des erfindungsgemäßen Verfahrens sieht vor, dass das Nachrutschen der Holzbrennstoffpellets aus dem Pelletspeicher in die Eingangsseite der Fördervorrichtung mittels einer im Entlastungsrohr angeordneten und mittels eines Aktors in Schwingungen versetzbaren Stange gesteuert wird. Dadurch können Fördermengen gezielt eingestellt und Verstopfungen vermieden werden.

Eine andere Ausgestaltung des erfindungsgemäßen Verfahrens ist dadurch gekennzeichnet, dass der Aktor in Abhängigkeit einer Pelletfördermenge geregelt wird, die mittels eines am Förderweg angeordneten Sensor gemessenen wird. So kann die Pelletfördermenge beispielsweise auf akustischem, optischem oder elektromagnetischem Weg ermittelt werden (zum Beispiel zählen oder wiegen) und die Schwingungsamplitude und/oder Schwingungsdauer des Aktors beeinflussen. Hierüber lässt sich dann die Pelletförderleistung der Bereitstellungseinrichtung einstellen.

Die Zeichnungen stellen Ausführungsbeispiele der Erfindung dar und zeigen in:
- Fig.1: eine Bereitstellungseinrichtung, dessen Fördermittel wenigstens teilweise innerhalb des Pelletspeichers angeordnet sowie von einem geodätisch vertikal ausgerichteten Entlastungsrohr umgeben ist;
- Fig. 2: eine Bereitstellungseinrichtung, die unterhalb eines Pelletspeichers angeordnet ist und eine Oberfläche aufweist, die sich radial an eine Innenseite eines Trägerrohrs bindet;
- Fig. 3: eine Bereitstellungseinrichtung, deren Förderrichtung im Wesentlichen linear ausgerichtet ist.

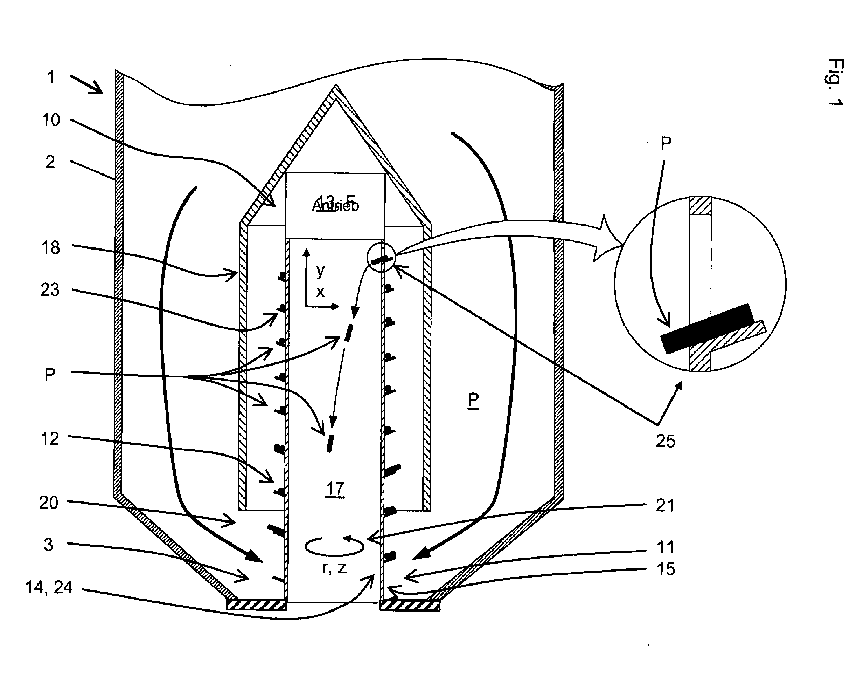

**Fig. 1** zeigt eine Bereitstellungseinrichtung 1 für Holzbrennstoffpellets P mit einem Pelletspeicher 2 und einer Fördervorrichtung 10 mit einem Fördermittel 14 zum Fördern von Holzbrennstoffpellets P in einer Förderrichtung r. Die Fördervorrichtung 10 steht mit einer Eingangsseite 11 mit dem Pelletspeicher 2 in Verbindung. Von der Eingangsseite 11 weist eine Oberfläche 12 mit einer Steigung in die Förderrichtung r. Außerdem verfügt die Bereitstellungseinrichtung über einen Aktor 13. Das Fördermittel 14 ist im Wesentlichen drehfest und positionsfest gelagert sowie mittels des Aktors 13 in eine Schwingung F versetzbar. Die Schwingung F umfasst eine geodätisch vertikale Schwingungskomponente y sowie eine geodätisch horizontale Schwingungskomponente x. Letztere ist insbesondere eine Drehschwingungskomponente.

Die Oberfläche 12 ist selbstredend von einem Trägerelement auszubilden, das jedoch in seiner Gestaltung abseits der Oberfläche 12 relativ frei ist. Ein solches Trägerelement kann beispielsweise eine Führungsbahn, eine Schiene, ein Profilkörper oder ein Freiformkörper sein. Bedingung ist lediglich eine relativ große Steifigkeit, bzw. Unflexibilität, da die Schwingungserregung über der Oberfläche 12 relativ gleich verteilt sein sollte, um an jeder Stelle eine vergleichbare Fortbewegungsgeschwindigkeit der Holzbrennstoffpellets bewirken zu können.

Wie man erkennt, ist die Fördervorrichtung 10 mit ihrer Eingangsseite 11 im Bereich des geodätisch unten liegenden Endes 3 des Pelletspeichers 2 angeordnet. Von der Eingangsseite 11 windet sich die Oberfläche 12 des Fördermittels 14 um ein Trägerrohr 15. Das Trägerrohr 15 ist insbesondere zylindrisch. Die Oberfläche 12 ist radial um das Trägerrohr 15 herumgeführt und mündet über eine Abladekante 25 in das Innere 17 des Trägerrohrs 15. Mithin steigt die Oberfläche 12 von der Eingangsseite 11 in Förderrichtung r geodätisch an. Damit Holzbrennstoffpellets P nicht von der Oberfläche zurück in Richtung des unten liegenden Endes 3 des Pelletspeichers 2 zurückfallen können, hat die Oberfläche 12 längst zur Förderrichtung r eine randseitige Überhöhung 23. Gegenüberliegend bildet das Trägerrohr 14 ebenfalls eine randseitige Überhöhung 24 aus.

Weiterhin erkennt man, dass das Fördermittel 14 am Aktor 13 aufgehängt ist. Das Fördermittel 14 und der Aktor 13 sind innerhalb des Pelletspeichers 2 angeordnet. Hierfür sind sie von einem geodätisch vertikal ausgerichteten Entlastungsrohr 18 umgeben, das eine geodätisch oben liegende Pelletsperre ausbildet. Im Bereich der Eingangsseite 11 der Fördervorrichtung 10 ist eine radiale Öffnung 20 vorgesehen, über die Holzbrennstoffpellets P in die Eingangsseite 11 der Fördervorrichtung 10 gelangen können.

Durch eine modulierte Schwingungserregung der Oberfläche 12 mittels des Aktors 13 wandern die Holzbrennstoffpellets P von der Eingangsseite wendelförmig um das Trägerrohr 15 herum, bis sie schließlich über die Abladekante 25, die als Loch in der Wandung des Trägerrohrs 15 ausgebildet ist, in das Innere 17 des Trägerrohrs 15 gelangen und schließlich an ihren Bestimmungsort fallen, wobei es sich zum Beispiel um eine Rutsche oder unmittelbar um eine Verbrennungseinrichtung handelt.

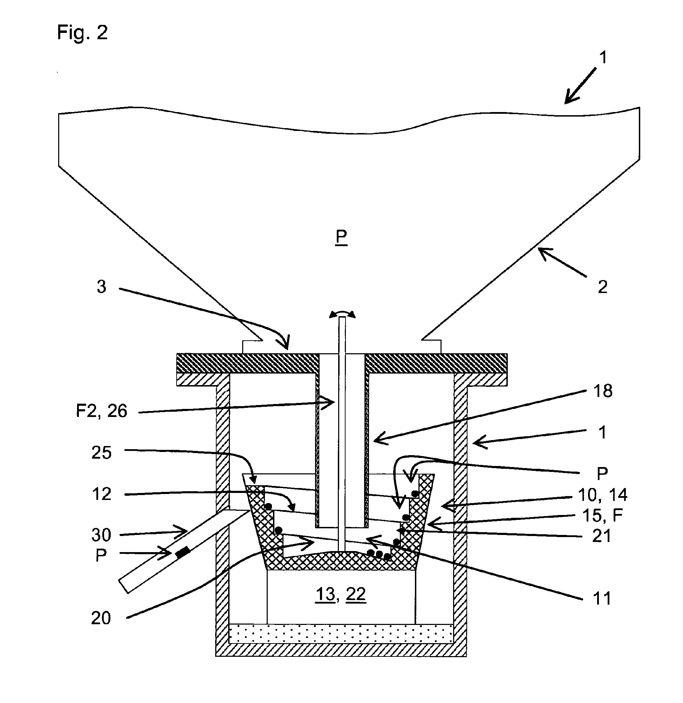

**Fig. 2** zeigt eine Bereitstellungseinrichtung 1 für Holzbrennstoffpellets P mit einem Pelletspeicher 2 und einer Fördervorrichtung 10. Die Fördervorrichtung 10 ist insbesondere im Wesentlichen unterhalb, das heißt im Bereich des geodätisch unten liegenden Endes 3 des Pelletspeichers 2 angeordnet. Die Fördervorrichtung 10 verfügt über ein Fördermittel 14 zum Fördern von Holzbrennstoffpellets P in einer Förderrichtung r. Dabei steht die Fördervorrichtung 10 mit einer Eingangsseite 11 mit dem Pelletspeicher 2 in Verbindung. Die Fördervorrichtung 10 verfügt über eine von der Eingangsseite 11 ausgehende sowie in Förderrichtung r ausgerichtete Oberfläche 12 mit einer Steigung. Außerdem ist ein Aktor 13 zum Betrieb der Fördervorrichtung 10 vorgesehen. Insbesondere ist das Fördermittel 14 auf dem Aktor 13 gelagert. Die Lagerung ist insbesondere derart ausgebildet, dass das Fördermittel 14 im Wesentlichen drehfest und positionsfest ist. Allerdings ist das Fördermittel 14 mittels des Aktors 13 in eine Schwingung F versetzbar. Die Schwingung F umfasst eine geodätisch vertikale Schwingungskomponente y und eine geodätisch horizontale Schwingungskomponente x. Letztere ist insbesondere eine Drehschwingungskomponente. Durch Überlagerung der vertikalen Schwingungskomponente x und der horizontalen Schwingungskomponente y ergibt sich eine in Förderrichtung r weisende Schwingungskomponente z.

Das Fördermittel 14 umfasst ein Trägerrohr 15 mit einer wendelförmig an dieser angeordneten Oberfläche 12. Die Oberfläche 12 steigt von der Eingangsseite 11 in Förderrichtung r geodätisch an. Dabei ist das Trägerrohr 15 im Wesentlichen vertikal ausgerichtet. Wie man erkennt, weitet sich das Trägerrohr von unten nach oben konisch auf. Zudem erkennt man, dass die Oberfläche 12 radial an einer Innenseite 21 des Trägerrohrs 15 herumgeführt ist, sowie eine radial nach außen weisende Abladekante 25 aufweist.

Die Verbindung zwischen dem Pelletspeicher 12 und den Fördermittel 14 umfasst ein Entlastungsrohr 18, das geodätisch vertikal ausgerichtet ist und von oben in das Trägerrohr 15 hineinragt. Innerhalb bzw. unterhalb des Trägerrohrs 15 ist eine radiale Öffnung 20 im Bereich der Eingangsseite 11 der Fördervorrichtung 10 ausgebildet.

Zur Vermeidung einer Verkeilung von Holzbrennstoffpellets P innerhalb des Entlastungsrohres 18, ragt eine Stange 26 in das Entlastungsrohr 18 hinein, die mittels eines Aktors 22 in Schwingung F2 versetzbar ist. Dabei durchdringt die Stange 26 das Entlastungsrohr 18 auf dessen gesamter Länge. Anstatt einen separaten Aktor 22 zur Schwingungserregung der Stange 26 vorzusehen, kann die Stange 26 wie dargestellt mittels kinematischer Kopplung mit dem Aktor 13 zur Schwingungserregung des Fördermittels 14 verbunden sein. Somit übernimmt der Aktor 13 die Schwingungserregung des Fördermittels 14 auch die der Stange 26.

Auf der Eingangsseite 11 vorliegende Holzbrennstoffpellets P werden mittels einer Schwingungserregung F entlang der Oberfläche 12 auf der Innenseite 21 des Trägerrohrs 15 nach oben bewegt, insbesondere durch sogenannte Mikrowürfe. In radialer Richtung nach außen bildet das Trägerrohr 15 gewissermaßen eine randseitige Überhöhung aus. Radial in Richtung des Zentrums des Trägerrohrs ist eine solche randseitige Überhöhung entbehrlich, da die Holzbrennstoffpellets aufgrund einer zentripetalen Kraft auf der Oberfläche 12 verbleiben.

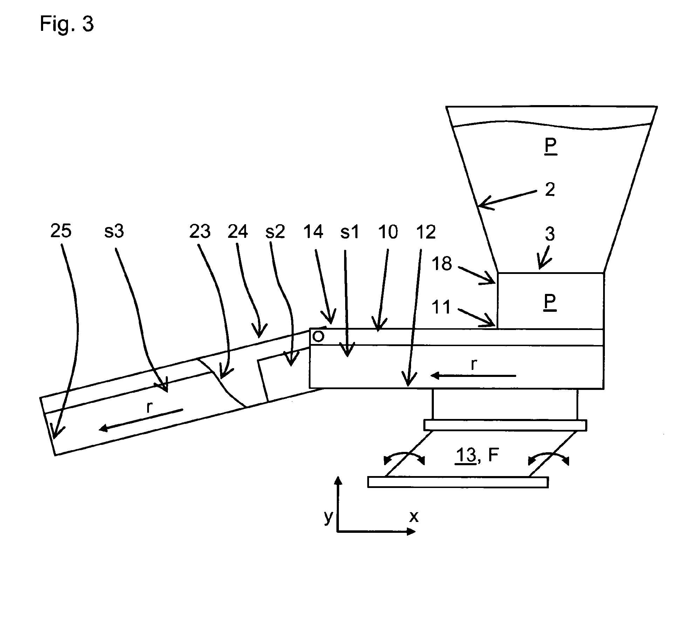

In **Fig. 3** erkennt man eine Bereitstellungseinrichtung 1 für Holzbrennstoffpellets P mit einem Pelletspeicher 2 und einer Fördervorrichtung 10. Die Fördervorrichtung 10 umfasst ein Fördermittel 14 zum Fördern von Holzbrennstoffpellets P in einer Förderrichtung r. Die Fördervorrichtung 10 ist mit einer Eingangsseite 11 mit dem Pelletspeicher 2 verbunden und weist eine von der Eingangsseite 11 in die Förderrichtung r ausgerichtete Oberfläche 12 mit einer Steigung auf. Die Oberfläche 12 ist mit einem Aktor 13 gekoppelt. Das Fördermittel 14 mit der Oberfläche 12 ist im Wesentlichen drehfest und positionsfest gelagert sowie mittels des Aktors 13 in Schwingung F versetzbar. Die Schwingung F umfasst dabei eine geodätisch vertikale Schwingungskomponente y und eine geodätisch horizontale Schwingungskomponente x.

Weiterhin erkennt man, dass die Fördervorrichtung 10 mit ihrer Eingangsseite 11 im Bereich des geodätisch unten liegenden Endes 3 des Pelletspeichers 2 angeordnet ist. Die Oberfläche 12 verläuft von der Eingangsseite 11 in Förderrichtung r zunächst horizontal und fällt schließlich geodätisch ab. Dabei hat die Oberfläche 12 quer zur Förderrichtung r ausgerichtete Stufen s1, s2, s3. Sowohl die Stufen s1, s2, s3 als auch die unterschiedlichen Steigungen tragen zu einer Separierung der Holzbrennstoffpellets P auf ihrem Weg zum Zielort, bzw. der Abladekante 25, bei. Damit die Holzbrennstoffpellets P die Oberfläche 12 nicht verlassen können, sind an der Oberfläche 12 längs zur Förderrichtung r randseitige Überhöhungen 23, 24 angeordnet. Wie aus der Figur hervorgeht ist die Förderrichtung r im Wesentlichen linear ausgerichtet.

Durch Erregung der Oberfläche 12 mit einer Schwingung F können nunmehr Holzbrennstoffpellets P mittels kleiner Mikrowürfe von der Eingangsseite 11 in Richtung der Abladekante 25 transportiert und gleichzeitig vereinzelt werden.

**Bezugszeichenliste**

| | | | |
|---|---|---|---|
| 1 | Bereitstellungseinrichtung | F | Schwingung |
| 2 | Pelletspeicher | F2 | Schwingung |
| 3 | unten liegendes Ende | P | Holzbrennstoffpellets |
| | | r | Förderrichtung |
| 10 | Fördervorrichtung | s1 | erste Stufe |
| 11 | Eingangsseite | s2 | zweite Stufe |
| 12 | Oberfläche | s3 | dritte Stufe |
| 13 | Aktor | | |
| 14 | Fördermittel | y | vertikale |
| 15 | Trägerrohr | | Schwingungskomponente |
| 17 | Innere | x | horizontale |
| 18 | Entlastungsrohr | | Schwingungskomponente |
| 20 | radiale Öffnung | z | Schwingungskomponente in |
| 21 | Innenseite | | Förderrichtung |
| 22 | Aktor | | |
| 23 | randseitige Überhöhung | | |
| 24 | randseitige Überhöhung | | |
| 25 | Abladekante | | |
| 26 | Stange | | |
| | | | |
| 30 | Rutsche | | |

## Patentansprüche

1. Bereitstellungseinrichtung (1) für Holzbrennstoffpellets (P) mit einem Pelletspeicher (2) und einer Fördervorrichtung (10) mit einem Fördermittel (14) zum Fördern von Holzbrennstoffpellets (P) auf einem Förderweg in einer Förderrichtung (r) zu einem Zielort, wobei die Fördervorrichtung (10) mit einer Eingangsseite (11) mit dem Pelletspeicher (2) in Verbindung steht und eine von der Eingangsseite (11) in die Förderrichtung (r) ausgerichtete Oberfläche (12) mit einer Steigung sowie einen Aktor (13) aufweist, wobei
das Fördermittel (14) im Wesentlichen drehfest und im Wesentlichen positionsfest gelagert sowie mittels des Aktors (13) in Schwingung (F) versetzbar ist, wobei die Schwingung (F) eine geodätisch vertikale Schwingungskomponente (y) umfasst, wobei
das Fördermittel (14) ein Trägerrohr (15) mit einer wendelförmig an diesem angeordneten Oberfläche (12) umfasst, und wobei
die Oberfläche (12) wendelförmig und in Förderrichtung (r) geodätisch ansteigend auf einer inneren Mantelfläche des Trägerrohrs (15) herumgeführt ist sowie eine radial nach außen weisende Abladekante (25) aufweist,
**dadurch gekennzeichnet, dass** der Pelletspeicher (2) ein geodätisch unten angeordnetes und geodätisch vertikal ausgerichtetes Entlastungsrohr (18) aufweist, das von oben in das Trägerrohr (15) hineinragt, wobei innerhalb des Trägerrohrs (15) eine radiale Öffnung (20) im Bereich der Eingangsseite (11) der Fördervorrichtung (10) ausgebildet ist, und wobei
eine Stange (26) in das Entlastungsrohr (18) hineinragt, die mittels eines Aktors (22) in Schwingung (F2) versetzbar ist.

2. Bereitstellungseinrichtung (1) nach Anspruch 1,
**dadurch gekennzeichnet, dass** die Schwingung (F) eine geodätisch horizontale Schwingungskomponente (x) umfasst.

3. Bereitstellungseinrichtung (1) nach einem der Ansprüche 1 oder 2,
**dadurch gekennzeichnet, dass** die Schwingung (F) eine in Förderrichtung (r) weisende Schwingungskomponente (z) umfasst.

4. Bereitstellungseinrichtung (1) nach einem der vorhergehenden Ansprüche,
**dadurch gekennzeichnet, dass** an der Oberfläche (12) längs zur Förderrichtung (r) wenigstens teilweise randseitige Überhöhungen (23, 24) angeordnet sind.

5. Bereitstellungseinrichtung (1) nach einem der vorhergehenden Ansprüche,
**dadurch gekennzeichnet, dass** die Oberfläche (12) mindestens in Teilbereichen eine Strukturierung und/oder Beschichtung zur Erhöhung der Pellethaftung und/oder Pelletreibung aufweist, wobei Stufen (s1, s2, s3), Rippen, Rillen, Noppen, Vertiefungen oder Gummierungen zum Einsatz kommen.

6. Bereitstellungseinrichtung (1) nach einem der vorhergehenden Ansprüche,
**dadurch gekennzeichnet, dass** das Fördermittel (14) am Aktor (13) aufgehängt ist.

7. Bereitstellungseinrichtung (1) nach einem der vorhergehenden Ansprüche,
**dadurch gekennzeichnet, dass** die Förderrichtung (r) im Wesentlichen linear ausgerichtet ist.

8. Verfahren zur Bereitstellung von Holzbrennstoffpellets (P) mittels einer Bereitstellungseinrichtung (1) nach einem der vorhergehenden Ansprüche, **gekennzeichnet durch** folgende Schritte:
a) Zuführen von Holzbrennstoffpellets (P) in die Eingangsseite (11) der Fördervorrichtung (10) **durch** Nachrutschen von Holzbrennstoffpellets (P) aus dem Pelletspeicher (2);
b) Beaufschlagen des Fördermittels (14) mit einer Schwingung (F) mittels des Aktors (13);
c) Transportieren der Holzbrennstoffpellets (P) in Förderrichtung (r) von der Eingangsseite (11) über die Oberfläche (12) mittels der **durch** den Aktor (13) angeregten Schwingung (F) und **dadurch** ausgelöste Mikrowürfe der Holzbrennstoffpellets (P) auf der Oberfläche (12).

9. Verfahren nach Anspruch 8,
**dadurch gekennzeichnet, dass** das Nachrutschen der Holzbrennstoffpellets (P) aus dem Pelletspeicher (2) in die Eingangsseite (11) der Fördervorrichtung (10) mittels einer im Entlastungsrohr (18) angeordneten und mittels eines Aktors (22) in Schwingungen versetzbaren Stange (26) gesteuert wird.

10. Verfahren nach Anspruch 8 oder 9,
**dadurch gekennzeichnet, dass** der Aktor in Abhängigkeit einer mit einem am Förderweg angeordneten Sensor gemessenen Pelletfördermenge geregelt wird.

## Claims

1. Supply device (1) for wood fuel pellets (P), having a pellet store (2) and a conveying device (10) with a conveying means (14) for conveying wood fuel pellets (P) on a conveying path in a conveying direction (r) to a target location, the conveying device (10) being connected to the pellet store (2) by an inlet side (11) and having a surface (12) that is oriented from the inlet side (11) in the conveying direction (r) and has a slope and an actuator (13),
the conveying means (14) being mounted such that it is substantially fixed against rotation and substantially fixed in position and can be set vibrating (F) by means of the actuator (13), the vibration (F) comprising a geodetically vertical vibration component (y),
the conveying means (14) comprising a carrier pipe (15) with a surface (12) arranged helically on the latter, and
the surface (12) being led around spirally and rising geodetically in the conveying direction (r) on an inner circumferential surface of the carrier pipe (15) and having a discharge edge (25) pointing radially outwards,
**characterized in that** the pellet store (2) has a discharge pipe (18) arranged geodetically at the bottom and orientated geodetically vertically, which projects into the carrier pipe (15) from above, wherein a radial opening (20) is formed within the carrier pipe (15) in the region of the inlet side (11) of the conveying device (10), and wherein
a rod (26) which can be set vibrating (F2) by means of an actuator (22) projects into the discharge pipe (18).

2. Supply device (1) according to Claim 1,
**characterized in that** the vibration (F) comprises a geodetically horizontal vibration component (x).

3. Supply device (1) according to either of Claims 1 and 2,
**characterized in that** the vibration (F) comprises a vibration component (z) pointing in the conveying direction (r).

4. Supply device (1) according to one of the preceding claims,
**characterized in that**, at least to some extent, elevations (23, 24) are arranged on the surface (12) at the edge, longitudinally with respect to the conveying direction (r).

5. Supply device (1) according to one of the preceding claims,
**characterized in that** the surface (12) has structuring and/or coating, at least in some regions, in order to increase the pellet adhesion and/or pellet friction, use being made of steps (s1, s2, s3), ribs, grooves, studs, depressions or rubber coatings.

6. Supply device (1) according to one of the preceding claims,
**characterized in that** the conveying means (14) is suspended on the actuator (13).

7. Supply device (1) according to one of the preceding claims,
**characterized in that** the conveying direction (r) is oriented substantially linearly.

8. Method for supplying wood fuel pellets (P) by means of a supply device (1) according to one of the preceding claims,
**characterized by** the following steps:
a) feeding wood fuel pellets (P) into the inlet side (11) of the conveying device (10) by sliding wood fuel pellets (P) out of the pellet store (2);
b) applying a vibration (F) to the conveying means (14) by means of the actuator (13);
c) transporting the wood fuel pellets (P) in the conveying direction (r) from the inlet side (11) over the surface (12) by means of the vibration (F) excited by the actuator (13) and micro-jerks of the wood fuel pellets (P) triggered thereby on the surface (12).

9. Method according to Claim 8,
**characterized in that** the sliding of the wood fuel pellets (P) out of the pellet store (2) into the inlet side (11) of the conveying device (10) is controlled by means of a rod (26) that is arranged in the discharge pipe (18) and can be set vibrating by means of an actuator (22).

10. Method according to Claim 8 or 9,
**characterized in that** the actuator is regulated as a function of a pellet conveyed quantity measured by a sensor arranged on the conveying path.

## Revendications

1. Dispositif de fourniture (1) de granulés de bois combustibles (P) comprenant un réservoir de stockage de granulés (2) et un dispositif de transport (10) comprenant un moyen de transport (14) pour le transport de granulés de bois combustibles (P) sur une trajectoire de transport dans une direction de transport (r) jusqu'à un lieu de destination, le dispositif de transport (10) étant en liaison par un côté d'entrée (11) avec le réservoir de stockage de granulés (2) et présentant une surface (12) avec une pente, orientée dans la direction de transport (r) depuis le côté d'entrée (11), ainsi qu'un actionneur (13),
le moyen de transport (14) étant supporté essentiellement de manière fixée en rotation et essentiellement de manière fixée en position et pouvant être amené à osciller (F) au moyen de l'actionneur (13), l'oscillation (F) comprenant une composante d'oscillation (y) géodésiquement verticale,
le moyen de transport (14) comprenant un tube de support (15) avec une surface (12) disposée en hélice sur celui-ci, et
la surface (12) étant guidée en hélice et en montant géodésiquement dans la direction de transport (r) sur une surface d'enveloppe interne du tube de support (15) et présentant une arête de déchargement (25) orientée radialement vers l'extérieur,
**caractérisé en ce que** le réservoir de stockage de granulés (2) présente un tube de décharge (18) disposé géodésiquement en bas et orienté géodésiquement verticalement, qui pénètre par le haut dans le tube de support (15), une ouverture radiale (20) étant réalisée à l'intérieur du tube de support (15) dans la région du côté d'entrée (11) du dispositif de transport (10), et
une tige (26) pénétrant dans le tube de décharge (18), laquelle peut être amenée à osciller (F2) au moyen d'un actionneur (22).

2. Dispositif de fourniture (1) selon la revendication 1,
**caractérisé en ce que** l'oscillation (F) comprend une composante d'oscillation (x) géodésiquement horizontale.

3. Dispositif de fourniture (1) selon l'une quelconque des revendications 1 ou 2,
**caractérisé en ce que** l'oscillation (F) comprend une composante d'oscillation (z) tournée dans la direction de transport (r).

4. Dispositif de fourniture (1) selon l'une quelconque des revendications précédentes, **caractérisé en ce que** des rehaussements (23, 24) au moins en partie du côté des bords sont disposés sur la surface (12) le long de la direction de transport (r).

5. Dispositif de fourniture (1) selon l'une quelconque des revendications précédentes, **caractérisé en ce que** la surface (12) présente, au moins dans des régions partielles, une structuration et/ou un revêtement pour augmenter l'adhérence des granulés et/ou le frottement des granulés, des gradins (s1, s2, s3), des nervures, des rainures, des bossages, des renfoncements ou des gommages étant utilisés.

6. Dispositif de fourniture (1) selon l'une quelconque des revendications précédentes, **caractérisé en ce que** le moyen de transport (14) est accroché à l'actionneur (13).

7. Dispositif de fourniture (1) selon l'une quelconque des revendications précédentes, **caractérisé en ce que** la direction de transport (r) est orientée essentiellement linéairement.

8. Procédé de fourniture de granulés de bois combustibles (P) au moyen d'un dispositif de fourniture (1) selon l'une quelconque des revendications précédentes,
**caractérisé par** les étapes suivantes :
a) acheminement de granulés de bois combustibles (P) dans le côté d'entrée (11) du dispositif de transport (10) par écoulement des granulés de bois combustibles (P) hors du réservoir de stockage de granulés (2) ;
b) sollicitation du moyen de transport (14) avec une oscillation (F) au moyen de l'actionneur (13) ;
c) transport des granulés de bois combustibles (P) dans la direction de transport (r) depuis le côté d'entrée (11) sur la surface (12) au moyen de l'oscillation (F) produite par l'actionneur (13) et des sauts microscopiques des granulés de bois combustibles (P) sur la surface (12), provoqués par ladite oscillation.

9. Procédé selon la revendication 8,
**caractérisé en ce que** l'écoulement des granulés de bois combustibles (P) hors du réservoir de stockage de granulés (2) dans le côté d'entrée (11) du dispositif de transport (10) est commandé au moyen d'une tige (26) disposée dans le tube de décharge (18) et amenée à osciller au moyen d'un actionneur (22).

10. Procédé selon la revendication 8 ou 9, **caractérisé en ce que** l'actionneur est excité en fonction d'une quantité de transport de granulés mesurée avec un capteur disposé sur la trajectoire de transport.
